# EUROPEAN PATENT APPLICATION

(11) **EP 4 692 911 A1**
(43) Date of publication of application: **11.02.2026**
(21) Application number: 23930888.5
(22) Date of filing: 07.12.2023
(51) Int. Cl.: G02C 7/10, G02C 7/02

(54) **SPECTACLE LENS, SPECTACLE LENS SET, AND METHOD FOR DESIGNING SPECTACLE LENS**

(30) Priority: 30.03.2023 JP 2023055747; 04.12.2023 US 202363605940 P
(71) Applicant: Hoya Lens Thailand Ltd., Pathumthani 12130 (TH)
(72) Inventor: QI, Hua, Tokyo 160-8347 (JP); MATSUOKA, Shohei, Tokyo 160-8347 (JP); KNUTSON, Ryan, Ramsey, Minnesota 55303 (US)
(74) Representative: Betten & Resch
(86) International application number: PCT/JP2023/043910
(87) International publication number: WO 2024/202263

(57) **Abstract**

There is provided a spectacle lens 10 including a plurality of segment regions 11 that cause a light beam incident from an object-side surface to exit from an eyeball-side surface and to converge on a position other than on a retina of an eyeball of a spectacle wearer, wherein the plurality of segment regions 11 are configured to achieve a vision value equal to or lower than a predetermined vision limit value; and an area ratio of non-segment regions with respect to a combined region of the plurality of segment regions and the non-segment regions other than the segment regions is 0% or more and 25% or less.

## Description

### Background

### Technical Field

The present disclosure relates to a spectacle lens, a spectacle lens set, and a spectacle lens designing method.

### Description of related art

In the case of unilateral amblyopia, treatment may involve blocking or decreasing the visual acuity of the other non-amblyopic healthy eye in order to allow an optic nerve of an amblyopic eye to develop (train). Specifically, it is known that the healthy eye can be completely covered with an eye patch, or that the visual acuity can be decreased by using a Bangerter filter or Bangerter occlusion foil, which have fine irregularities (for example, see patent documents 1 and 2).

### Prior art document

### Patent document

[Patent Document 1] JP 2013-254040 A
[Patent Document 2] JP 2022-068287 A

### Summary of the invention

### Problem to be solved by the invention

When it comes to treating amblyopia, especially in pediatric patients, early detection and treatment are key, and it is desirable to minimize a burden on a patient. However, the above-described technique of treating amblyopia has the following drawbacks. For example, the technique of completely covering a healthy eye with an eye patch can cause pain to the patient when worn for long periods of time, which can interfere with his or her daily life, and can also hinder the development of stereoscopic vision, which is possible when seeing with both eyes. In addition, according to the technique of decreasing the visual acuity of the healthy eye using the Bangerter filter, etc., the visual acuity is decreased by using an orthotic that looks like white frosted glass, which possibly impairs the aesthetic appearance of the patient when wearing the orthotic, resulting in causing the patient to feel reluctant to wear the glasses.

For example, use of a single vision lens with a power different from a wearer's corrective power (prescription power) can respond to a decrease in visual acuity, but this method entails a risk of collapsing a balance of collision congestion control, resulting in strabismus or amblyopia.

One aspect of the present disclosure provides a technique relating to a spectacle lens that is suitable for use in treating unilateral amblyopia.

### Means for solving the problem

A first aspect of the present disclosure is a spectacle lens comprising a plurality of segment regions that cause a light beam incident from an object-side surface to exit from an eyeball-side surface and to converge on a position other than on a retina of an eyeball of a spectacle wearer,
wherein the plurality of segment regions are configured to achieve a vision value equal to or lower than a predetermined vision limit value; and
an area ratio of non-segment regions with respect to a combined region of the plurality of segment regions and the non-segment regions other than the segment regions is 0% or more and 25% or less.

A second aspect of the present disclosure is the spectacle lens according to the first aspect, wherein the area ratio satisfies 0% or more and 25% or less within a region of a second predetermined diameter D2 assumed at an arbitrary position within a range of a first predetermined diameter D1 including at least a lens center.

A third aspect of the present disclosure is the spectacle lens according to the second aspect, wherein the area ratio is 0% or more and 25% or less over an entire lens.

A fourth aspect of the present disclosure is the spectacle lens according to the first aspect, wherein the plurality of segment regions are arranged with periodicity.

A fifth aspect of the present disclosure is the spectacle lens according to the fourth aspect,
wherein the plurality of segment regions are arranged such that centers of the segment regions are respectively located at vertices of triangles constituting a triangular lattice;
a planar size d on a lens when the segment region exists alone is in a range of 0.25 mm or more and 2.0 mm or less;
an arrangement spacing p between adjacent ones of the plurality of segment regions is in a range of 0.25 mm or more and 2.0 mm or less; and
the planar size d and the arrangement spacing p satisfy a relationship of 0.866 < p/d < 1.1.

A sixth aspect of the present disclosure is the spectacle lens according to the fourth or fifth aspect, wherein the adjacent segment regions are arranged so as to be in contact with each other.

A seventh aspect of the present disclosure is the spectacle lens according to the first aspect, wherein the segment region has convex portions that cause a light beam to converge on a position closer to an object side than on the retina.

An eighth aspect of the present disclosure is the spectacle lens according to the first aspect, wherein the segment region has concave portions that cause a light beam to converge on a position farther from an object side than on the retina.

A nineth aspect of the present disclosure is the spectacle lens according to the seventh or eighth aspect, wherein the non-segment region is formed in a curved shape so that a light beam is converged on a position on an opposite side to the segment region, with the retina sandwiched therebetween.

A tenth aspect of the present disclosure is the spectacle lens according to the first aspect, having an optical film covering the plurality of segment regions.

An eleventh aspect of the present disclosure is a spectacle lens set, which is a set of spectacle lenses composed of a left-eye lens and a right-eye lens,
wherein one of the left-eye lens and the right-eye lens is an occlusion lens composed of the spectacle lens according to the first aspect, and
the other of the left-eye lens and the right-eye lens is a non-occlusion lens having an optical surface that causes a light beam incident from an object-side surface to exit from an eyeball-side surface and converge on a retina of an eyeball of a spectacle wearer.

A twelfth aspect of the present disclosure is the spectacle lens set according to the eleventh aspect, wherein the plurality of segment regions in the occlusion lens are arranged along a virtual curved surface corresponding to the optical surface of the non-occlusion lens.

A thirteenth aspect of the present disclosure is a spectacle lens design method including:
designing an optical surface so that one of object-side and eyeball-side optical surfaces to have a plurality of segment regions that cause a light beam incident on an object-side surface to emit from an eyeball-side surface and converge on a position different from a retina of an eyeball of a spectacle wearer,
wherein in the designing the optical surface, a spectacle lens is designed in such a manner that:
   the plurality of segment regions are arranged along a virtual curved surface corresponding to the optical surface that causes the light beam incident from the object-side surface to exit from the eyeball-side surface and converge on the retina of the eyeball of the spectacle wearer;
   the plurality of segment regions are configured to achieve a vision value equal to or lower than a predetermined vision limit value; and
   an area ratio of non-segment regions with respect to a combined region of the plurality of segment regions and the non-segment regions other than the segment regions is 0% or more and 25% or less.

### Advantage of the invention

One aspect of the present disclosure is suitable for use in treating unilateral amblyopia.

### Brief description of the drawings

[FIG. 1] FIG. 1 is a perspective view showing an example of a schematic configuration of a spectacle lens set according to one embodiment of the present disclosure.
[FIG. 2] FIG. 2 is an explanatory view showing an example of a planar configuration of the spectacle lens according to one embodiment of the present disclosure.
[FIG. 3] FIG. 3 is an explanatory view showing an example of a cross-sectional configuration of the spectacle lens according to one embodiment of the present disclosure.
[FIG. 4] FIG. 4 is an explanatory view showing an example of an arrangement of segment regions of the spectacle lens according to one embodiment of the present disclosure.
[FIG. 5] FIG. 5 is an explanatory view showing another example of an arrangement of the segment regions of the spectacle lens according to one embodiment of the present disclosure.
[FIG. 6] FIG. 6 is an explanatory view showing an example of a cross-sectional configuration of a non-segment region of the spectacle lens according to one embodiment of the present disclosure.
[FIG. 7] FIG. 7 is an explanatory view (part 1) showing a specific example of optical properties of the spectacle lens according to one embodiment of the present disclosure.
[FIG. 8] FIG. 8 is an explanatory view (part 2) showing a specific example of the optical properties of the spectacle lens according to one embodiment of the present disclosure.
[FIG. 9] FIG. 9 is an explanatory view (part 3) showing a specific example of the optical properties of the spectacle lens according to one embodiment of the present disclosure.
[FIG. 10] FIG. 10 is an explanatory view (part 4) showing a specific example of the optical properties of the spectacle lens according to one embodiment of the present disclosure.
[FIG. 11] FIG. 11 is an explanatory view showing a specific example of a procedure for designing the segment regions of the spectacle lens according to one embodiment of the present disclosure.

### Detailed description of the invention

Hereinafter, one embodiment of the present disclosure will be described with reference to the drawings. Note that the following description is merely an example, and the present invention is not limited to the illustrated embodiment.

### (1) Configuration of a spectacle lens set

First, a spectacle lens set according to one embodiment of the present disclosure will be explained.

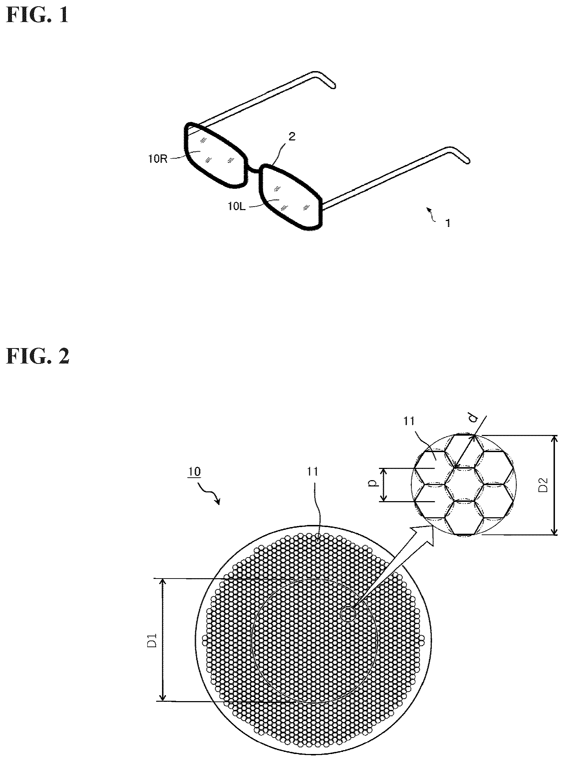

FIG. 1 is a perspective view showing an example of a schematic configuration of the spectacle lens set.

The illustrated spectacle lens set is composed of a left-eye lens 10L and a right-eye lens 10R. The pair of lenses 10L, 10R are attached to a spectacle frame 2 to be worn by a patient who needs treatment for unilateral amblyopia. That is, the left-eye lens 10L and the right-eye lens 10R are attached to the spectacle frame 2 to form a spectacle 1 for treating unilateral amblyopia (hereinafter also simply referred to as a "therapeutic spectacles"). A wearer of the therapeutic spectacles 1 is a patient who needs treatment for unilateral amblyopia.

One of the left-eye lens 10L and the right-eye lens 10R is a lens with an occlusion function (occlusion lens) that is placed in front of a patient's healthy eye. The occlusion lens is sometimes referred to as "a lens for a healthy eye", because it is arranged to correspond to the healthy eye. The other of the left-eye lens 10L and the right-eye lens 10R is a non-occlusion lens that is placed in front of a patient's amblyopic eye. The non-occlusion lens is hereinafter also referred to as "a lens for an amblyopic eye", because it is arranged to correspond to the amblyopic eye. In this way, the arrangement of the occlusion lens and the non-occlusion lens is determined depending on which of the patient's eyes has amblyopia.

The left-eye lens 10L and the right-eye lens 10R each has an object-side surface and an eyeball-side surface. The "object-side surface" is a surface that is located on an object side when the therapeutic spectacles 1 are worn by a patient who is a wearer. The "eyeball-side surface" is the opposite, that is, a surface that is located on an eyeball side when the therapeutic spectacles 1 are worn by a patient who is a wearer. Both the left-eye lens 10L and the right-eye lens 10R are configured so that, when the therapeutic spectacles 1 are worn by a patient, a light beam incident from the object side surface is emitted from the eyeball side surface toward the eyeball of a patient who is a wearer.

However, the non-occlusion lens (lens for an amblyopic eye) is designed so that a light beam emitted toward the eyeball is converged on the retina of the eyeball. That is, the non-occlusion lens is configured to have an optical surface that causes the light beam to converge on the retina of the eyeball. Accordingly, the non-occlusion lens is configured to achieve a prescription power prescribed for the wearer so that the light beam is converged on the retina of the wearer's eyeball.

In contrast, the occlusion lens (lens for a healthy eye) is configured so that the light beam emitted toward the eyeball is converged on a position other than on the retina of the eyeball. Accordingly, the occlusion lens is configured to have a different power from the prescription power prescribed for the wearer, so that the light beam is converged on a position other than on the retina of the wearer's eyeball. A specific configuration in which the light beam is converged on a position other than on the retina will be described in detail later.

Due to such a difference in the configuration of the lenses 10L, 10R, the visual acuity of the healthy eye through the occlusion lens is decreased, for the patient who is the wearer of the therapeutic spectacles 1. This allows to stimulate and develop (train) the optic nerve of the amblyopic eye, which is expected to be effective in treating unilateral amblyopia.

### (2) Configuration of a spectacle lens

Next, a spectacle lens according to one embodiment of the present disclosure will be described. The spectacle lens described here corresponds to the occlusion lens (lens for a healthy eye) in the spectacle lens set described above.

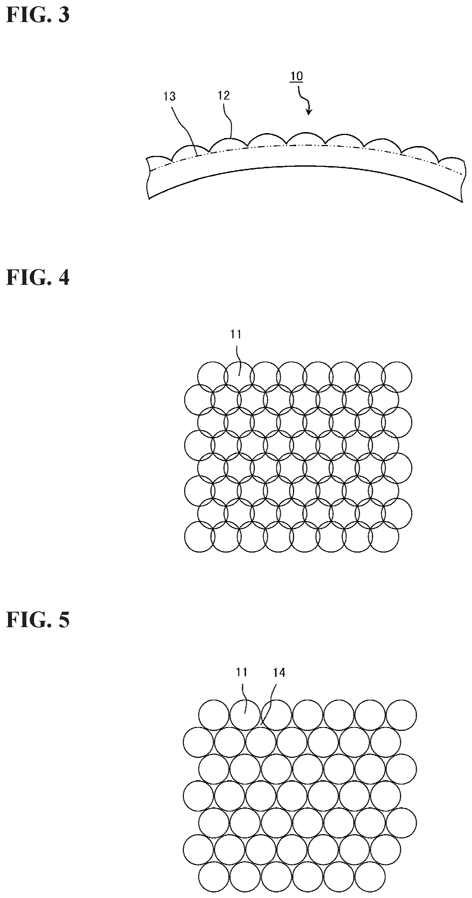

FIG. 2 is an explanatory view showing an example of a planar configuration of the spectacle lens. FIG. 3 is an explanatory view showing an example of a cross-sectional configuration of the spectacle lens.

In these figures, the occlusion lens is simply referred to as a spectacle lens 10 because it can be used as either the left-eye lens 10L or the right-eye lens 10R.

The spectacle lens 10 used as an occlusion lens is configured to have a plurality of segment regions 11 as shown in FIG. 2. The segment regions 11 are provided to cause the light beam incident on the object-side surface to exit from the eyeball-side surface of the spectacle lens 10 and to converge on a position other than on the retina of the eyeball of the spectacle wearer (i.e., a patient with unilateral amblyopia). In other words, the segment regions 11 are the regions for achieving a power different from the prescription power of the spectacle wearer so that the light beam is converged on a position other than on the retina.

Specifically, as shown in FIG. 3, each segment region 11 has a convex portion 12 formed on the object-side surface of the spectacle lens 10. The convex portion 12 has a curved surface that protrudes convexly toward the object side, and is configured so that the light beam transmitted through the spectacle lens 10 is converged on a position closer to the object side than on the retina. In this way, since the segment region 11 having the convex portion 12 causes the light beam to converge on a position closer to the object side than on the retina, it is expected that a therapeutic effect for unilateral amblyopia can be obtained through a decrease in visual acuity when viewed through the spectacle lens 10.

However, each segment region 11 is not limited to having the convex portion 12. Each segment region 11 may have, for example, a concave portion having a curved surface that curves in the opposite direction to the convex portion 12 (that is, a concave portion that causes the light beam to converge on a position farther from the object side than on the retina.), as long as the light beam transmitted through the spectacle lens 10 is converged on a position other than on the retina. Even in this case, it is expected that the therapeutic effect for the unilateral amblyopia can be obtained through the decrease in visual acuity through the spectacle lens 10.

Since the segment region 11 causes the light beam to converge on a position closer to the object side than on the retina, it is known that a myopia progression suppressing effect can be achieved, which suppresses the progression of myopia in the case where the spectacle wearer is myopic. In addition, since the segment region 11 having the concave portion causes the light beam to converge on the position farther from the object side than on the retina, it is known that when a spectacle wearer is hyperopic, a hyperopia improving effect is achieved, which improves the degree of hyperopia. In consideration of these findings, depending on the degree of refractive error in the wearer's amblyopic eye, it may be determined whether to employ convex portions 12 or concave portions in the segment region 11, or whether to use a mixture of both. For example, the convex portions 12 may be used for myopic people, and the concave portions may be used for hyperopic people.

The following description shows a case where each segment region 11 is configured to have a convex portion 12, as an example. However, even when configured to have a concave portion, the optical effects obtained as an occlusion lens (lens for a healthy eye) are substantially the same in either case, except for those resulting from a light beam converging position.

The convex portions 12 constituting each segment region 11 are arranged so as to line up along a predetermined virtual curved surface 13, as shown in FIG. 3. The virtual curved surface 13 corresponds to the optical surface of the non-occlusion lens (lens for an amblyopic eye) that forms a pair with the spectacle lens 10 used as an occlusion lens. More specifically, the virtual curved surface 13 is an optical surface on the object side of the non-occlusion lens, and can be a virtual curved surface composed of a curvature that is the same as, or differs so little from, the optical surface configured to cause the light beam to be converged on the retina of the eyeball. Accordingly, for example, when the non-occulusion lens (lens for an amblyopic eyes) is a single vision lens, the virtual curved surface 13 can correspond to a spherical surface in accordance with the prescription power of the single vision lens. Due to arrangement of the convex portions 12 along such a virtual curved surface 13, when the occlusion lens and the non-occlusion lens are used in a pair (set), the magnification and other properties of each lens become equal, and therefore the risk of decreased binocular vision due to unequal vision between left and right eyes can be avoided. At the same time, when other people view the wearer from outside, a situation where the wearer's left and right eyes appear different in size, etc., can be avoided.

Due to arrangement of the convex portions 12 constituting each segment region 11, the spectacle lens 10 used as an occlusion lens does not cause the light beam to converge on the retina of the eyeball, unlike the non-occlusion lens used in pairs (set), and this causes a decrease in visual acuity compared to the case of the non-occlusion lens. That is, due to the existence of each segment region 11, the spectacle lens 10 achieves a lower vision value than the non-occlusion lens used in a pair (set).

The vision value by the spectacle lens 10 is achieved on the assumption that the decrease in visual acuity is caused to such an extent that the therapeutic effect can be derived for unilateral amblyopia. Specifically, this is a vision value equal to or lower than a predetermined vision limit value that is achieved on the assumption that an occlusion effect is derived to such an extent that the therapeutic effect can be derived for monocular amblyopia. The predetermined vision limit value may be, for example, 0.3 or less, and may be 0.1 or less as exhibiting a more reliable occlusion effect. Accordingly, in the spectacle lens 10, each segment region 11 is configured to achieve a vision value of, for example, 0.3 or less, preferably 0.1 or less.

For each segment region 11, a planar size d, an arrangement spacing p, and a refractive power are set so as to achieve a vision value equal to or lower than a predetermined vision limit value.

The planar size d of the segment region 11 is a representative value of a size, when viewed in plan, of an area surrounded by a boundary line of the intersection between the curved surface that constitutes the segment region 11 (hereinafter referred to as a "segment curved surface") and a lens curved surface that serves as a base for placing the segment region 11 (for example, the virtual curved surface 13. Hereinafter, this will also be referred to as a "base lens curved surface.") when the segment region 11 exists alone. For example, when the boundary line is a circle, the maximum value, average value, median value, or the like of the diameter of the circle corresponds to the planar size d. In actuality, when an interval between adjacent segment regions 11 is sufficiently large, that is, when the segment regions 11 are spaced apart from each other, the segment regions 11 are the regions surrounded by the boundary line of the intersection between the segment curved surface and the base lens curved surface, but when the interval between the adjacent segment regions 11 is small and the two segment regions 11 partially overlap each other, the line of the intersection between both segment curved surfaces becomes the boundary line. That is, the segment region 11 is a region surrounded by lines of intersection between the segment curved surface of the segment region 11 and the segment curved surfaces of all adjacent segment regions 11 or lines of intersection with the base lens curved surface. When the two adjacent segment regions 11 have even one common boundary line, the two segment regions 11 are said to be "in contact" with each other.

In this embodiment, the planar size d of the segment region 11 is set to be in a range of, for example, 0.25 mm or more and 2.0 mm or less, and preferably in a range of 0.25 mm or more and 1.3 mm or less. When the planar size d is 0.25 mm or more, it is preferable in that the difficulty in forming fine irregularities is reduced compared to when the planar size d is smaller than 0.25 mm. Further, when the planar size d is 2.0 mm or less, and preferably 1.3 mm or less, irregularities of that size are difficult to perceive, which is preferable in that the aesthetic appearance of the spectacle lens 10 can be prevented from being impaired.

The arrangement spacing p between the segment regions 11 is a distance value between reference points in the adjacent segment regions 11 when each segment region 11 is viewed in a plan view (for example, the center point of a planar shape or the apex of a convex shape when the segment region 11 exists alone).

In this embodiment, a lower limit of the arrangement spacing p between the segment regions 11 is set to, for example, 0.25 mm or more, and preferably 1.0 mm or more. When the arrangement spacing p is 0.25 mm or more, scattered reflection due to external lighting is suppressed, and the spectacle lens 10 does not appear to other people as white flickering. Also, by setting the arrangement spacing p as being relatively large, 1.0 mm or more, the risk of flickering (looking like a screen door) for the spectacle wearer can be reduced, which is caused by false resolution due to diffraction effects brought about by the periodicity of the arrangement. An upper limit of the arrangement spacing p between the segment regions 11 is set, for example, based on a pupil diameter of a human eye, and is set to 2.0 mm or less, which is approximately half an average pupil diameter. By setting the arrangement spacing p to be somewhat small, 2.0 mm or less, local prism is suppressed and there is no effect on eye convergence.

Further, the planar size d and the arrangement spacing p between the segment region 11 can be determined depending on what ratio to be used between the area of the segment regions 11 and the area of the non-segment regions other than the segment regions 11 which will be described in detail later. When aiming for the effect of decreasing in visual acuity, it is better to reduce the area of the non-segment regions. As an example, in the case where the center of the segment region 11 having a circular planar shape is disposed at the vertex of a triangle constituting a triangular lattice, it is desirable to set the planar size d and the arrangement spacing p so as to satisfy the relationship of 0.866 < p/d < 1.1. When satisfying p < 0.866d, the non-segment regions that exist between the segment regions 11 completely disappear, so there is no need to satisfy p/d < 0.866. On the other hand, when satisfying p/d > 1.1, the non-segment regions become large, and there is a risk that the decrease in visual acuity, which is the objective of this technique, will not be achieved. In this way, when the segment regions 11 are arranged at the vertices of the triangles that constitute the triangular lattice, a maximum effect of decreasing in visual acuity can be obtained, while satisfying the above-described constraints (conditions) set for the planar size d and the arrangement spacing p. The segment regions 11 may be arranged in other patterns instead of being arranged at the vertices of the triangles that constitute the triangular lattice. In this case, a different constraint may be set for p/d so as to maximize a desired effect of decreasing in visual acuity.

A refractive power of the segment region 11 is a defocus power caused by the convex portion 12 of the segment region 11. The defocus power is not simply a "power" but is a deviation expressed in units of D (diopters) between a case where the segment region 11 exists and a case where it does not exist (i.e., a case where only the virtual curved surface 13 exists). That is, the defocus power corresponds to a relative power difference between the segment region 11 and the virtual curved surface 13.

In this embodiment, the refractive power (defocus power) of the segment region 11 is set appropriately so that the spectacle lens 10 achieves a vision value equal to or lower than a vision limit value. When the planar size d and the arrangement spacing p satisfy the above constraints (conditions), by adjusting the defocus power, the vision value can be adjusted without excessively increasing or decreasing the risk. Specifically, the vision value with a vision limit value of 0.3 or less is obtained by adjusting the defocus power to 3.51D for example. Also, the vision value with a vision limit value of 0.1 or less is obtained by adjusting the defocus power to 5.80D for example. More generally, when the absolute value of the difference between the maximum and minimum values of the sag amount in the same segment region 11 is multiplied by refractive index minus 1 value, the refractive index being at e-line of the material constituting the segment region 11, and when the resultant value is 265 nm or more, preferably 530 nm or more, the spectacle lens satisfying this condition functions as a factor that blocks high spatial frequency components over a wide area.

The convex portion 12 of each segment region 11 having such a refractive power is not particularly limited in its curved shape, but may be configured, for example, in a spherical shape (spherical lens). In this case, excessive scattering is less likely to occur when the light beam passes through the spectacle lens 10, which is preferable. Also, for example, the convex portion 12 may be configured in an aspheric shape (aspheric lens) having a stronger power on a periphery side than in the vicinity of the apex (center) of the convex portion 12. In this case, since the periphery contributes to the decrease in visual acuity, the vision value equal to or lower than the vision limit value can be achieved, which is preferable.

Further, for each segment region 11, the planar size d, arrangement spacing p, and refractive power are set as described above, and the area ratio of the segment region 11 is set as follows. When the spectacle lens 10 is viewed in a plan view, a plurality of segment regions 11 and the non-segment regions that are regions other than the segment regions 11, may exist within an entire area of the lens. The area ratio of the segment regions 11 here refers to the ratio of the area of the non-segment regions with respect to the area of the combined region of the segment regions 11 and non-segment regions respectively.

In this embodiment, the area ratio of the non-segment regions is set to be 0% or more and 25% or less, and preferably 12% or less. When the area ratio of the non-segment regions is 0%, there are no non-segment regions, and the area is covered only by the segment regions 11.

It is preferable that such an area ratio of the non-segment regions is satisfied over the entire area of the spectacle lens 10. However, the present invention is not limited thereto. For example, as shown in FIG. 1, even when the area ratio of the non-segment regions is not satisfied in the vicinity of the periphery of the spectacle lens 10, it is sufficient that the area ratio is satisfied at least in a partial region as follows. The "partial region" referred to here is a region through which the line of sight of a spectacle wearer is likely to pass frequently. More specifically, the partial region is a region that belongs to a range of a second predetermined diameter D2 that is assumed at an arbitrary position within a range of a first predetermined diameter D1 that includes a lens center (geometric center or optical center). The first predetermined diameter D1 is, for example, φ30 mm or more and φ50 mm or less, and preferably φ40 mm ±5 mm. The second predetermined diameter D2 is, for example, φ2.5 mm or more and φ5.0 mm or less, and preferably about 4.0 mm which is an average pupil diameter. That is, the above-described area ratio needs to be satisfied at least within a region of the second predetermined diameter D2 that is approximately an average pupil diameter assumed at any position within the range of the first predetermined diameter D1 through which the line of sight passes frequently.

Under the above-described constraints (conditions), the segment regions 11 are arranged with periodicity. The periodicity referred to here means that the segment regions 11 are repeatedly arranged according to a certain rule. Accordingly, the segment regions 11 do not have to be arranged at equal intervals, but as long as they are arranged with some regularity, they are considered to be arranged with periodicity. For example, in the arrangement of the plurality of segment regions 11, an arrangement with segments at specific positions thinned out is also considered to have periodicity as long as there is some regularity.

Further, the segment regions 11 are respectively arranged so that adjacent segment regions 11 are in contact with each other. For example, when the area ratio of the non-segment regions is 0%, the segment regions 11 are arranged so that their entire periphery is in contact with other segment regions 11. However, it is not required that the entire periphery is in contact with other segment regions 11, and it is sufficient that each segment region 11 is arranged so that at least a part of the segment region 11 is in contact with other segment region 11.

FIG. 4 is an explanatory view showing an example of the arrangement of the segment regions 11. In the illustrated example, the entire periphery of each segment region 11 is in contact with other segment region 11, and the area ratio of the non-segment regions is 0%.

In this arrangement example, the segment regions 11 are arranged so that their centers are located at the vertices of the triangles that constitute the triangular lattice. As a result, the segment regions 11 are positioned in a honeycomb (staggered) pattern, and the segment regions 11 are arranged in such a positional relationship that the vicinity of their peripheries overlap and are superimposed on one another. Therefore, according to this arrangement example, each segment region 11 can be most efficiently arranged within a limited range, and the planar shape of each segment region 11 is a polygon (specifically, for example, a hexagon) defined by a boundary line of each segment curved surface.

FIG. 5 is an explanatory view showing another example of the arrangement of the segment regions 11. In the illustrated example, the planar shape of each segment region 11 is circular, a part of the outer periphery is in contact with other segment regions 11, and the area ratio of the non-segment regions is greater than 0%.

In this arrangement example also, the segment regions 11 are arranged so that their centers are located at the vertices of the triangles that constitute the triangular lattice, and the segment regions 11 are positioned in a honeycomb (staggered) pattern. However, in this arrangement example, the segment regions 11 do not overlap each other, and a part of the outer periphery of each segment region 11 is in contact with the other segment regions 11, and therefore non-segment regions 14 exist between each of the segment regions 11. However, the area ratio of the non-segment region 14 is 25% or less.

The arrangement examples shown in FIG. 4 and FIG. 5 are merely examples, and the arrangement of the segment regions 11 is not limited to these examples.

When the non-segment regions 14 exist between the segment regions 11, the non-segment regions 14 may be configured as follows.

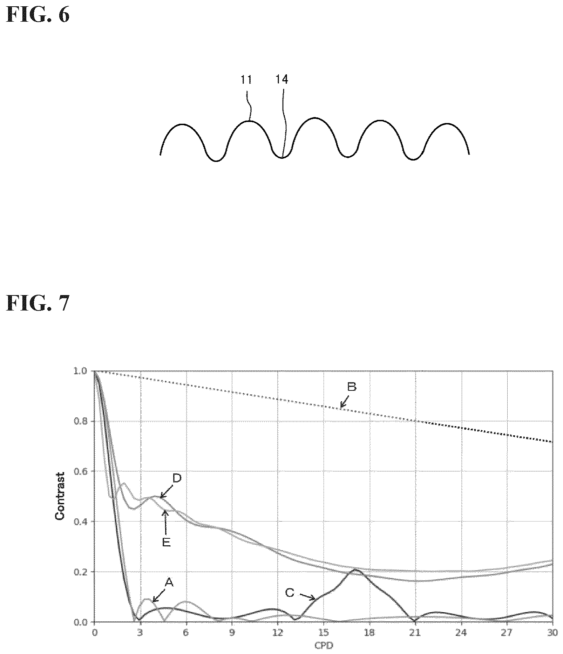

FIG. 6 is an explanatory view showing an example of a cross-sectional configuration of the non-segment region 14.

As shown in FIG. 6, when each segment region 11 has a convex portion 12, the non-segment region 14 can be formed in a curved shape (i.e., a concave shape) that curves in the opposite direction to the convex portion 12 so as to connect adjacent convex portion 12 to each other. In this case, while the segment region 11 causes the light beam to converge on a position closer to the object side than on the retina, the non-segment region 14 causes the light beam to converge on a position farther from the object side than on the retina. That is, the non-segment region 14 can be formed in a curved shape that causes the light beam to converge on a position on the opposite side to the segment region 11, with the retina sandwiched therebetween.

In the above configuration, the boundary between the segment region 11 and the non-segment region 14 or the boundary between the segment regions 11 can be considered as a point of switching the direction of the curved surface shape (positive or negative sign when expressed in terms of defocus power). In this case, at a boundary portion, the defocus power is "0", but since the area thereof is a linear band that is extremely small, there is no need to consider such a portion as a single region, and such a portion does not affect optical properties of the spectacle lens 10.

When each segment region 11 has a convex portion 12, the convex portion 12 is considered to be formed from a lens base material that constitutes the spectacle lens 10. The same applies to the shape of the non-segment region 14.

The lens base material is composed of a thermosetting resin material such as thiourethane, allyl, acrylic, or epithio. As the resin material constituting the lens base material, other resin materials that can provide a desired refractive index may be selected. Further, the lens base material may be composed of inorganic glass instead of the resin material. When such a lens base material is used, the convex portion 12 or the like can be formed by a molding processing using a mold.

The surface of the lens base material may be coated with an optical film. Examples of the optical film include a hard coat film (HC film) and an anti-reflection film (AR film), and in addition to these, other films may also be formed. These optical films may be formed using a known technique, and detailed description thereof will be omitted here.

When the optical film is coated, the optical film covers each segment region 11. In this case, the optical film may be formed thin so that its surface conforms to the surface shape of the lens base material, or may be formed thick so as to fill in and smooth out the irregularities on the surface shape of the lens base material.

In either case, it is preferable that the spectacle lens 10, which is composed of the lens base material and the optical film, has a refractive index of 1.55 or more and more preferably about 1.59 for a light beam incident from the object-side surface.

### (3) Optical properties of the spectacle lens

Next, optical properties of the spectacle lens 10 having the above-described configuration will be described.

FIG. 7 is a view (part 1) showing a specific example of the optical properties of the spectacle lens 10. The example shows a relationship between the spatial frequency of light transmitted through the lens and contrast, with the horizontal axis indicating a spatial frequency (CPD: cycles per degree) and the vertical axis indicating a contrast sensitivity.

In the figure, symbol A indicates a specific example of the optical properties of the spectacle lens 10 having the above-described configuration, in the case of p = 1.0 mm and p/d = 1.0. Symbols B to E are comparative examples with respect to the specific example of symbol A. Symbol B indicates a specific example of the optical properties of the non-occlusion lens used in combination with the spectacle lens 10 having the above-described configuration. Symbol C indicates one specific example of the optical properties of a member used as a Bangerter filter. Symbols D and E indicate a specific example of the optical properties of the spectacle lens that has a segment region defined by a convex portion but does not satisfy the above-described constraints (conditions) (for example, the spectacle lens with the area ratio of the non-segment region being approximately 30 to 70% or 40 to 60%).

As shown in FIG. 7, in the spectacle lens 10 having the above-described configuration, the contrast sensitivity is cut off to a low level in a range of CPD > 3 (see symbol A). CPD = 3 corresponds to a vision value of approximately 0.1. Accordingly, it is found that in this spectacle lens 10, the vision value is kept low so as to achieve the vision limit value of 0.1 or less that provides a reliable occlusion effect. In contrast, in the spectacle lens that does not satisfy the above-described constraints (conditions) (see symbols D and E), the contrast sensitivity in the range of CPD > 3 is not sufficiently cut off to a low level due to the light beam transmitted through the non-segment region, and it cannot be said that the vision limit value of 0.1 or less is achieved. That is, by satisfying the above-described constraints (conditions) as in the case of the spectacle lens 10 described in this embodiment, the vision value of 0.1 or less, which is a vision limit value, is achieved. Although the Bangerter filter (see symbol C) can achieve the vision value of 0.1 or less, the peak of the contrast sensitivity occurs at a high spatial frequency (for example, CPD = 17), which is not preferable in that there is a risk of causing a false resolution to occur.

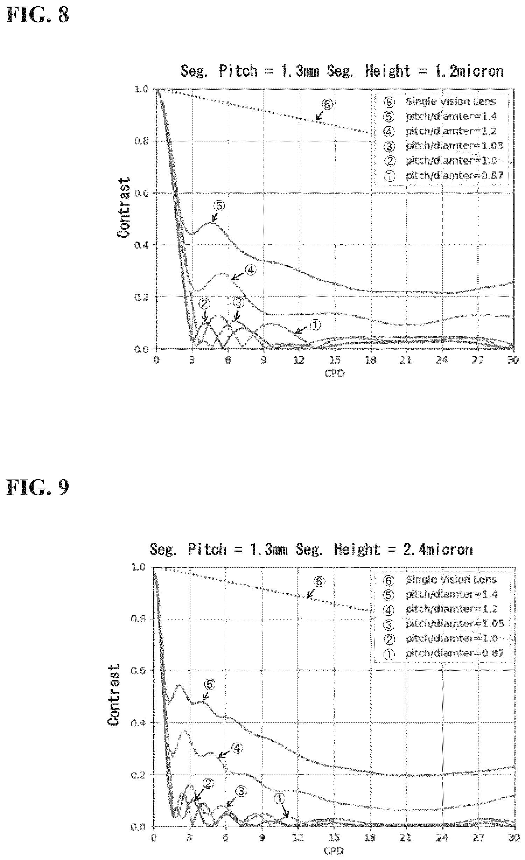

FIG. 8 is an explanatory view (part 2) showing a specific example of the optical properties of the spectacle lens 10. The illustrated example shows the relationship between the spatial frequency of light transmitted through the lens and the contrast when the spacing p between the segment regions 11 is 1.3 mm and the protruding height of the convex portion 12 from the virtual curved surface 13 is 1.2 µm, in the case of p/d = 0.87, p/d = 1.0, p/d = 1.05, p/d = 1.2, and p/d = 1.4. The horizontal and vertical axes indicate the same as in FIG. 7.

FIG. 9 is an explanatory view (part 3) showing a specific example of the optical properties of the spectacle lens 10.

The illustrated example shows the relationship between the spatial frequency of the light transmitted through the lens and the contrast when the arrangement spacing p between the segment regions 11 is 1.3 mm and the protruding height of the convex portion 12 from the virtual curved surface 13 is 2.4 µm. The rest is the same as in FIG. 8.

As shown in FIGS. 8 and 9, when p/d = 0.87, p/d = 10 and p/d = 1.05, the contrast sensitivity is cut off to a low level in the range of CPD > 3 in all cases. That is, it is found that the vision value is kept low so as to achieve the vision limit value of 0.1 or less that provides a reliable occlusion effect. Accordingly, in the spectacle lens 10, it can be said that when the relationship between the planar size d and the arrangement spacing p is set to satisfy 0.866 < p/d < 1.1, the vision value of 0.1 or less, which is the vision limit value, can be achieved.

In order to achieve the vision value of 0.1 or less, it is preferable that the height of the peak of the contrast sensitivity occurring in the range of CPD > 3 is as low as possible and that the peak occurs at a low CPD position. From this viewpoint, it can be said that, even when satisfying 0.866 < p/d < 1.1, it is most preferable that p/d = 1.0.

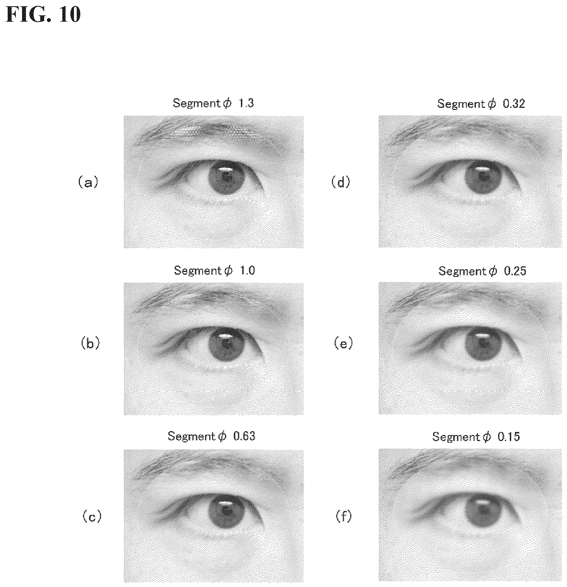

FIG. 10 is an explanatory view (part 4) showing a specific example of the optical properties of the spectacle lens 10. The illustrated example shows the results of a simulation of an appearance of a person wearing the spectacle lens when viewed from outside at a position 1 m away in an indoor environment with fluorescent lights installed on a ceiling. (a) shows a case where the planar size d of the segment region 11 is φ1.3 mm, (b) shows a case where the planar size d of the segment region 11 is φ1.0 mm, (c) shows a case where the planar size d of the segment region 11 is φ0.63 mm, (d) shows a case where the planar size d of the segment region 11 is φ0.32 mm, (e) shows a case where the planar size d of the segment region 11 is φ0.25 mm, and (f) shows a case where the planar size d of the segment region 11 is φ0.15 mm. In any one of the above cases, the protruding height of the convex portion 12 from the virtual curved surface 13 is 1.2 µm.

When viewing from outside the appearance of the person wearing the spectacle lens in an indoor environment exposed to fluorescent light, a composite image of the wearer's eyes, which is a transmitted image, and a reflected image of the fluorescent light are visually recognized on the surface of the spectacle lens. In this case, when the segment size (segment diameter) on the spectacle lens is large, the transmitted image will appear mosaic-like, but when the segment size is small, the mosaic effect will no longer be noticeable and the image will appear blurry overall. As the segment size becomes smaller, the reflected image picks up a wider range of illumination light, and reflected light becomes visible over an entire lens. Due to the combined effects of these factors, the smaller the segment size, the more cloudy the spectacle lens appears. This is the same as in the case of, for example, the Bangerter filter and frosted glass.

As shown in FIG. 10 (f), when the planar size d of the segment region 11 is φ0.15 mm, the spectacle lens 10 appears whitish and cloudy, and the outline of the wearer's eye appears blurred. In contrast, as shown in FIGS. 10 (a) to (e), when the planar size d of the segment region 11 is φ0.25 mm or more, the spectacle lens 10 will not become cloudy and the outline of the wearer's eye will be clearly visible. For these reasons, it can be said that it is extremely preferable for the planar size d of the segment region 11 to be 0.25 mm or more in order to prevent the aesthetic appearance of the spectacle lens 10 from being impaired.

On the other hand, as shown in FIG. 10 (a), when the planar size d of the segment region 11 is φ1.3 mm, some parts of the region start to look like mosaics. For this reason, the planar size d of the segment region 11 may be in the range of 0.25 mm or more and 2.0 mm or less, but from the viewpoint of preventing the aesthetic appearance of the spectacle lens 10 from being impaired, it is even more preferable to set the planar size d to 1.3 mm or less.

As described above, the spectacle lens 10 described in this embodiment not only provides a vision decreasing effect (occlusion effect) that achieves the vision value equal to or lower than the vision limit value, but also does not impair the aesthetic appearance when the spectacle lens 10 is viewed from outside while being worn. In this respect, the spectacle lens 10 is significantly different from the Bangerter filter, frosted glass, etc. Accordingly, the spectacle lens 10 described in this embodiment can eliminate the risk that a patient undergoing treatment for amblyopia will feel reluctant to wear the glasses.

### (4) Spectacle lens design method and manufacturing method

Next, a spectacle lens design method and a manufacturing method for the spectacle lens 10 having the above-described configuration will be described.

The spectacle lens 10 is designed based on a non-occlusion lens to be used in pair with the spectacle lens 10. That is, prior to designing the spectacle lens 10, first, the surface shape of the optical surface constituting the non-occlusion lens is specified in accordance with, for example, a prescribed power.

After specifying the optical surface, designing of the spectacle lens 10 is performed in such a manner that a virtual curved surface 13 for the spectacle lens 10 is specified so as to correspond to the surface shape of the optical surface of the non-occlusion lens. Then, a plurality of segment regions 11 are arranged so as to be aligned along the specified virtual curved surface 13, thereby specifying the surface shape of the optical surface of the spectacle lens 10. For example, in the case where the segment regions 11 are arranged in a honeycomb (staggered) pattern on the optical surface, a virtual triangular net is stretched on the specified virtual curved surface 13, the net being constituted of a combination of equilateral triangles, each of which has a length of one side equal to the arrangement spacing p between each segment region 11, and the convex portions 12 constituting each segment region 11 are arranged so that the reference points of each segment region 11 (for example, the center point of the planar shape or the vertex of the convex shape) are located at the vertices of the equilateral triangle in the triangular net. At this time, when the vicinity of the periphery of each segment region 11 overlaps each other, the position with a highest height from the virtual curved surface 13, including the surface of the virtual curved surface 13, is determined to be an outermost surface of the optical surface. In this manner, the convex portions 12 constituting each segment region 11 are joined together to obtain the surface shape of the optical surface of the spectacle lens 10.

When arranging each segment region 11, at least each of the planar size d and the arrangement spacing p are set in advance so that the planar size d is in a range of 0.25 mm or more and 2.0 mm or less, the arrangement spacing p is in a range of 0.25 mm or more and 2.0 mm or less, and the planar size d and the arrangement spacing p satisfy a relationship of 0.866 < p/d < 1.1. Thereby, after each segment region 11 is arranged, the area ratio of the non-segment region with respect to the combined area of each segment region 11 and the non-segment regions is 0% or more and 25% or less. That is, the segment regions 11 are arranged so that the area ratio of the non-segment regions is 0% or more and 25% or less.

More specifically, when each segment region 11 is configured by the convex portion 12, the segment regions 11 may be arranged as follows.

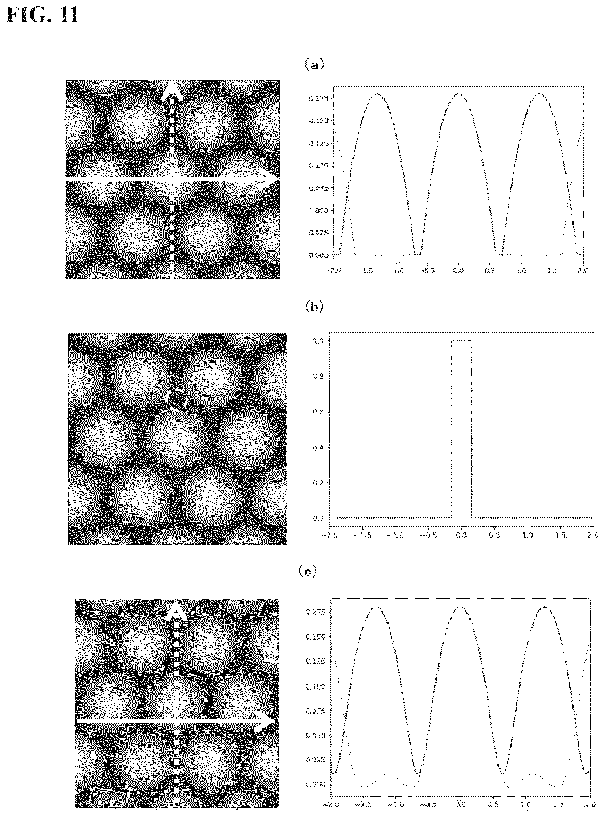

FIG. 11 is an explanatory view showing a specific example of a procedure for designing the segment regions.

As shown in FIG. 11 (a), as a first procedure, segment spherical surfaces (aspheric surfaces are also acceptable) are discretely arranged on a plane. The plane at this time corresponds to the virtual curved surface 13. The illustrated example shows a case where the curved surfaces with a diameter of 1.2 mm and a height of 0.18 mm are arranged at intervals of 1.3 mm. In FIG. 11 (a), the left side view shows the arrangement in a 2 mm square area, and the right side view shows a cross-sectional view taken along arrows, with solid and dotted lines in the right side view corresponding to the arrows in the left side view.

Then, as shown in FIG. 11 (b), as a second procedure, smoothing is performed using a smoothing filter. In FIG. 11 (b), the left-side view shows the diameter of the smoothing filter, and the right-side view shows its cross-sectional view. In this example, a uniform filter is used. If the filter diameter is not set to be larger than a maximum inscribed radius of the non-segment region, the surface of the virtual curved surface 13 will remain exposed. When the filter is arranged in a honeycomb pattern as described above, the relationship of filter diameter > arrangement spacing p × √ 3 ÷ 2 - planar size d is established. In this example, the diameter is 0.3 mm.

Thereafter, the segment height and the effective occlusion effect become large or small due to smoothing, and therefore as shown in FIG. 11 (c), as a third procedure, adjustment by scaling is performed in a height direction while checking the shape and performance. Thus, the convex portions 12 in each segment region 11 and the non-segment region 14 between the segment regions 11 are completed.

When machining such a surface shape, it is acceptable to convert it to spline data and add it to the base curve of the virtual curved surface 13.

By going through the above-described procedures, the optical surface of the spectacle lens 10 of this embodiment can be designed.

After the optical surface has been designed, the spectacle lens 10 of this embodiment can be manufactured based on the result of the design. Specifically, for example, a mold that reflects the result of the design is created, and a lens base material is created by performing molding processing using the mold, and then, if necessary, an optical film is formed on the lens base material, to thereby obtain the spectacle lens 10 of this embodiment.

Regarding the design method or manufacturing method of the spectacle lens 10, specific contents not described here may be realized by utilizing a publicly known technique.

When designing the spectacle lens 10, Gaussian function-like surfaces may be arranged without going through the procedure of forming discontinuous surfaces and then smoothing them, as in the above-described example. This is equivalent to a procedure in which a spherical segment region 11 having a small diameter (planar size d) relative to the spacing (arrangement spacing p) is smoothed by a Gaussian filter having a large diameter.

Further, if an optical film such as an HC film is applied thickly during the manufacture of the spectacle lens 10, the periphery of the segment region 11 may droop, increasing the planar size d in appearance. Therefore, taking this into consideration, a prospective adjustment may be performed at a design stage of the spectacle lens 10 to subtract the amount of expansion from the diameter of the smoothing filter. For example, when the thickness of the HC film is 2 µm, the planar size d may increase by approximately 0.05 mm, and therefore, by setting the filter diameter to 0.30 - 0.05 = 0.25 mm, an appropriate planar size d can be obtained in accordance with the degree of drooping of the HC film.

### (5) Effect of this embodiment

According to this embodiment, one or more of the following effects are achieved.

The spectacle lens 10 according to this embodiment provides a vision decreasing effect (occlusion effect) that realizes a vision value equal to or lower than a vision limit value. Accordingly, it is highly suitable for use in treating unilateral amblyopia.

According to the spectacle lens 10 of this embodiment, even when the vision decreasing effect (occlusion effect) is obtained, it is different from the method of completely blocking a healthy eye with an eye patch, so, it does not completely block light transmitted through the lens, and therefore even when worn for long periods of time, there is no risk of the patient feeling pain or interfering with their daily life, and there is no risk of inhibiting the development of stereoscopic vision that is achieved by seeing with both eyes.

According to the spectacle lens 10 of this embodiment, the aesthetic appearance is not impaired when the spectacle lens 10 is viewed from outside while being worn. Accordingly, unlike the technique of decreasing the visual acuity of the healthy eye using a Bangerter filter or the like, the spectacle lens 10 maintains an extremely natural appearance even when the patient is wearing glasses, eliminating the risk that a patient undergoing treatment for amblyopia will feel reluctant to wear the glasses.

According to the spectacle lens 10 of this embodiment, the vision decreasing effect (occlusion effect) is obtained by arranging each segment region 11, and therefore the risk of collapsing the balance of collision congestion control, resulting in strabismus or amblyopia can be reduced.

According to the spectacle lens 10 of this embodiment, each segment region 11 is arranged along the virtual curved surface 13 corresponding to the optical surface of the non-occlusion lens, and therefore even when the non-occlusion lens and the occlusion lens using the spectacle lens 10 are used as a pair (set) of the left-eye lens 10L and the right-eye lens 10R, the magnifications or the like of each lens are the same, and therefore for example, a situation where the wearer's left and right eyes appear different in size, etc., when viewed from outside can be avoided. In this respect also, an extremely natural appearance can be maintained, and the risk that patients undergoing treatment for amblyopia will feel reluctant to wear the glasses can be eliminated.

### (6) Modified examples, etc.

The embodiments of the present disclosure have been described above. However, the technical scope of the present invention is not limited to the above-described exemplary disclosure contents, and various modifications are possible without departing from the gist of the present disclosure.

This embodiment shows a case where convex portions are arranged on the object-side surface of the spectacle lens 10, to thereby form the segment regions, but the present invention is not limited thereto. For example, instead of the convex portions, concave portions may be arranged to thereby form the segment regions. Further, the convex or concave portions may be arranged on the eyeball-side surface, instead of the object-side surface of the spectacle lens 10. Further, for example, by being covered by an optical surface having a certain thickness or more, the convex or concave portions may be formed inside the spectacle lens 10 (i.e., other than the surface), to thereby form the segment regions. Further, the convex or concave portions may be formed on a membrane or film, and may be attached to the lens surface or sandwiched inside the lens.

This embodiment shows a case where the spectacle lens 10 is used to treat unilateral amblyopia, but the present invention is not limited thereto and can be used for other purposes.

### Description of sings and numerals

1 ... spectacles, 2 ... spectacle frame, 10 ... spectacle lens, 10L ... left eye lens, 10R ... right eye lens, 11 ... segment region, 12 ... convex portion, 13 ... virtual curved surface, 14 ... non-segment region

## Claims

1. A spectacle lens comprising a plurality of segment regions that cause a light beam incident from an object-side surface to exit from an eyeball-side surface and to converge on a position other than on a retina of an eyeball of a spectacle wearer,
wherein the plurality of segment regions are configured to achieve a vision value equal to or lower than a predetermined vision limit value; and
an area ratio of non-segment regions with respect to a combined region of the plurality of segment regions and the non-segment regions other than the segment regions is 0% or more and 25% or less.

2. The spectacle lens according to claim 1, wherein the area ratio satisfies 0% or more and 25% or less within a region of a second predetermined diameter D2 assumed at an arbitrary position within a range of a first predetermined diameter D1 including at least a lens center.

3. The spectacle lens according to claim 2, wherein the area ratio is 0% or more and 25% or less over an entire lens.

4. The spectacle lens according to claim 1, wherein the plurality of segment regions are arranged with periodicity.

5. The spectacle lens according to claim 4,
wherein the plurality of segment regions are arranged such that centers of the segment regions are respectively located at vertices of triangles constituting a triangular lattice;
a planar size d on a lens when the segment region exists alone is in a range of 0.25 mm or more and 2.0 mm or less;
an arrangement spacing p between adjacent ones of the plurality of segment regions is in a range of 0.25 mm or more and 2.0 mm or less; and
the planar size d and the arrangement spacing p satisfy a relationship of 0.866 < p/d < 1.1.

6. The spectacle lens according to claim 4 or 5, wherein the adjacent segment regions are arranged so as to be in contact with each other.

7. The spectacle lens according to claim 1, wherein the segment region has convex portions that cause a light beam to converge on a position closer to an object side than on the retina.

8. The spectacle lens according to claim 1, wherein the segment region has concave portions that cause a light beam to converge on a position farther from an object side than on the retina.

9. The spectacle lens according to claim 7 or 8, wherein the non-segment region is formed in a curved shape so that a light beam is converged on a position on an opposite side to the segment region, with the retina sandwiched therebetween.

10. The spectacle lens according to claim 1, having an optical film covering the plurality of segment regions.

11. A spectacle lens set, which is a set of spectacle lenses composed of a left-eye lens and a right-eye lens,
wherein one of the left-eye lens and the right-eye lens is an occlusion lens composed of the spectacle lens according to claim 1, and
the other of the left-eye lens and the right-eye lens is a non-occlusion lens having an optical surface that causes a light beam incident from an object-side surface to exit from an eyeball-side surface and converge on a retina of an eyeball of a spectacle wearer.

12. The spectacle lens set according to claim 11, wherein the plurality of segment regions in the occlusion lens are arranged along a virtual curved surface corresponding to the optical surface of the non-occlusion lens.

13. A spectacle lens design method comprising:
designing an optical surface so that one of object-side and eyeball-side optical surfaces to have a plurality of segment regions that cause a light beam incident on an object-side surface to emit from an eyeball-side surface and converge on a position different from a retina of an eyeball of a spectacle wearer,
wherein in the designing the optical surface, a spectacle lens is designed in such a manner that:
the plurality of segment regions are arranged along a virtual curved surface corresponding to the optical surface that causes the light beam incident from the object-side surface to exit from the eyeball-side surface and converge on the retina of the eyeball of the spectacle wearer;
the plurality of segment regions are configured to achieve a vision value equal to or lower than a predetermined vision limit value; and
an area ratio of non-segment regions with respect to a combined region of the plurality of segment regions and the non-segment regions other than the segment regions is 0% or more and 25% or less.
